# EUROPEAN PATENT APPLICATION

(11) **EP 3 614 126 A1**
(43) Date of publication of application: **26.02.2020**
(21) Application number: 19175249.2
(22) Date of filing: 17.05.2019
(51) Int. Cl.: G01N 21/17, G01N 21/03, G01N 29/24

(54) **PHOTOACOUSTIC GAS SENSOR DEVICE**

(71) Applicant: Sensirion AG, 8712 Stäfa (CH)
(72) Inventor: SALZMANN, Christophe, 8712 Stäfa (CH); HUNZIKER, Werner, 8712 Stäfa (CH); BRAUN, Stephan, 8712 Stäfa (CH); PUSTAN, David, 8712 Stäfa (CH); UEHLINGER, Thomas, 8712 Stäfa (CH)
(74) Representative: Toleti, Martin

(57) **Abstract**

A photoacoustic gas sensor device for determining a value indicative of a presence or a concentration of a component in a gas comprises a substrate (1) and a measurement cell body (2), the substrate (1) and the measurement cell body (2) defining a measurement cell enclosing a measurement volume (3). A reflective shield (17) divides the measurement volume (3) into a first volume (31) and a second volume (32). An opening (4) in the measurement cell is provided for a gas to enter the measurement volume (3). In the first volume (31) and on a front side (11) of the substrate (1) are arranged: An electromagnetic radiation source (7) for emitting electromagnetic radiation (8) through an aperture (18) in the reflective shield (17) into the second volume (32); and a pressure transducer (6) communicatively coupled to the second volume (32) for measuring a sound wave (9) generated by the component in response to an absorption of electromagnetic radiation (8) by the component. At least a portion of a surface (171) of the reflective shield (17) facing the second volume (32) is made of a material reflecting electromagnetic radiation (8).

## Description

### Technical Field

The present invention relates to a photoacoustic gas sensor device which is configured to determine a value indicative of a presence or a concentration of a component, in particular of CO₂, in a gas.

### Background Art

Photoacoustic gas sensors rely on the physical effect that e.g. infrared radiation is absorbed by molecules of a component of interest in a gas, e.g. CO₂, thereby transferring the molecules to an excited state. Subsequently heat is generated due to non-radiative decay of the excited state, e.g. by collisions of the molecules, which leads to an increase of pressure. Through modulating the infrared radiation to be absorbed with a modulation frequency, the pressure varies at the modulation frequency. Such pressure variation may be measured by a pressure transducer. The concentration of the component is proportional to an amplitude of the pressure variation.

In early photoacoustic gas sensors, a light source required for emitting the infrared radiation is located outside a measurement cell in which the photoacoustic effect is produced. The resulting gas sensor constitutes a bulky arrangement.

In more recent photoacoustic gas sensors the light source and the pressure transducer are arranged inside the measurement cell. However, such measurement cell still is large in size due to a long optical path length required for sufficient absorption of infrared radiation by molecules of the component. Moreover, a complex three-dimensional assembly of measurement cell, infrared source and pressure transducer is required. In addition, the infrared source and the pressure transducer may represent electrical components in the measurement cell, which do not promote reflection of the emitted light.

It is hence an object of the present invention to provide a photoacoustic gas sensor device showing a good reflectivity for the radiation emitted, and preferably being small in size.

### Disclosure of the Invention

The object is achieved by a photoacoustic gas sensor device according to a first aspect of the present invention as claimed in claim 1. The photoacoustic gas sensor device for determining a value indicative of a presence or a concentration of a component in a gas comprises a substrate and a measurement cell body arranged on a front side of the substrate. The substrate and the measurement cell body define a measurement cell enclosing a measurement volume. The measurement cell comprises an opening for a gas entering the measurement cell. In one embodiment, the opening allows a gas exchange between the measurement volume and surroundings of the measurement cell. The device further comprises an electromagnetic radiation source for emitting electromagnetic radiation, and a pressure transducer for measuring a sound wave generated by the component in response to an absorption of electromagnetic radiation by the component. The electromagnetic radiation source and the pressure transducer are arranged on the front side of the substrate and in the measurement volume.

A reflective shield is provided dividing the measurement volume into a first volume and a second volume. The pressure transducer as well as the electromagnetic radiation source are arranged in the first volume on the front side of the substrate. It is understood that the first volume is a volume common to the electromagnetic radiation source and the pressure transducer, i.e. the electromagnetic radiation source and the pressure transducer share the same space, i.e. a common space. Specifically, there is no barrier in the first volume between the pressure transducer and the electromagnetic radiation source. Although - as will be shown in more detail below - the actual photoacoustic conversion preferably takes place in the second volume, a combination of the first and the second volume still is legitimate to refer to as measurement volume given that the pressure transducer as measuring entity is located in the first volume. It is understood, that the measurement volume may be divided in more than two sub-volumes. However, the measurement volume is divided in at least the first and the second volume. It is further understood, that the side of the substrate both the electromagnetic radiation source and the pressure transducer are arranged on and mounted to is referred to as front side of the substrate. A side of the substrate opposite to the front side is referred to as back side.

The reflective shield comprises an aperture through which electromagnetic radiation generated by the electromagnetic radiation source is transmitted into the second volume, which aperture preferably is a single aperture. Hence, dividing the measurement volume into a first and a second volume does not imply two volumes sealed from each other. In contrast, the second volume is communicatively coupled to the first volume and specifically to the pressure transducer arranged therein. This enables the pressure transducer to detect sound variations caused by the absorption of the electromagnetic radiation by the components of interest in the first volume. Hence, the communicative coupling preferably is an acoustic coupling, and preferably includes that pressure changes in the second volume are detectable by the pressure transducer arranged in the first volume. The acoustic coupling may in one embodiment be effected by the single aperture in the reflective shield.

At least a portion of a surface of the reflective shield facing the second volume is made of a material reflecting electromagnetic radiation, and in particular reflecting the electromagnetic radiation of the specific wavelength or wavelength band emitted by the electromagnetic radiation source. The wavelength or wavelength band of the radiation emitted preferably coincides or includes the wavelength or wavelength band the component in the gas is prone to absorb.

For the above purpose of providing good reflectivity characteristics in the second volume, it is preferred that at least the major portion of the surface of the reflective shield facing the second volume is made of the reflective material, i.e. at least 50% of this surface. However, with the intent to further increase the reflectivity in the second volume, it is even more preferred that the entire surface of the reflective shield facing the second volume is made of the reflective material. In one alternative, the entire reflective shield is made of the reflective material, such that not only the surface facing the second volume but also the surface facing the first volume is made from the reflective material. In a different alternative, the reflective shield is made from at least two different materials, e.g. a core of the reflective shield is made of a first non- or low-reflective material, e.g. plastics, and a coating deposited on the core is made of a second material which is the reflective material. The coating may only be applied to the surface facing the second volume, or the coating may also be applied to the other surface of the reflective shield facing the first volume.

Preferably, it is intended to maximize surfaces defining the second volume with reflective material. Accordingly, at least a portion of an inner surface of the measurement cell body facing the second volume is made of the same reflective material the reflective shield is made of, or is made from a different reflective material. Even more preferably, at least a major portion of the inner surface of the measurement cell body facing the second volume is made of the or another reflective material, i.e. at least 50% of this inner surface. However, with the intent to further increase the reflectivity in the second volume, it is even more preferred that the entire inner surface of the measurement cell body facing the second volume, and in another variant the entire inner surface of the measurement cell body is made of the reflective material. I.e., a portion of or the entire inner surface preferably is made from the reflective material, again, either by way of a reflective coating applied to a core of the measurement cell body, or by the measurement cell body being made of the reflective material. In the latter embodiment, the measurement cell body may be made from sheet metal, e.g. by deep drawing. Sheet metal has the advantages of being mechanically stable even at low thickness, and of showing a high reflectivity for electromagnetic radiation even without any further coating. In the earlier embodiment, a core of the measurement cell body is made a non- or low-reflecting material, e.g. plastics, e.g. by injection molding, and a reflective coating is applied onto the inner surface.

Generally, the or a reflective material preferably is metal, or is a metal-filled polymer, or is a metallized or mirrored glass, or is another material with a high reflectivity, in particular for the wavelength of the radiation emitted. The reflective material e.g. may be one or more of gold, aluminum, nickel, or copper. These materials may in particular be used in case of a reflective coating is applied to a core.

As to the degree of reflectivity of the reflective material as used, it is preferred that surfaces of reflective material and / or surfaces defining the second volume have a reflectivity of more than 70%, preferably more than 80%, and more preferably more than 90%, each preferably in the band. In an embodiment, a ratio of inner surfaces of the second volume with a reflectivity of above 70% to inner surfaces of the second volume with a reflectivity of below 70% is above 20, preferably above 50, and more preferably above 100.

Accordingly, the second volume is designed to provide characteristics that best enable a reflection of the emitted radiation. While in conventional photoacoustic sensors the pressure transducer and the electromagnetic radiation source may be arranged in the measurement volume, such components often provide non- or bad reflecting surfaces while on the other hand these surfaces may constitute a non-negligible amount of the total surface defining the measurement volume. In the present approach, the electrical components including the pressure transducer and the electromagnetic radiation source are physically separated from the second volume which predominantly serves as space for enabling the photoacoustic conversion. Hence, any non-reflecting surfaces of the electrical components no longer affect the pathways of the radiation, and hence do not disturb the photoacoustic reactions or lower the sensitivity of the measurement signal. Furthermore, a high reflectivity of the inner surfaces of the measurement cell reduces an offset of the pressure signal, which is generated by the photoacoustic effect occurring in solid matter, e.g. on the surface of the measurement cell body.

Now, the second volume as part of the measurement volume in which the photoacoustic reactions preferably take place is separated from the first volume which is designed for accepting the electrical components to be placed within the measurement volume.

However, the first volume and the second volume are not separated in a way that the first volume is sealed from the second volume. Instead, the electromagnetic radiation generated by the corresponding source located in the first volume enters the second volume by an aperture in the reflective shield. Preferably, the electromagnetic radiation source is aligned with the aperture such that the radiation generated by the source enters through the aperture in the second volume. Once the electromagnetic radiation having entered in the second volume, the one or more reflective surfaces defining the second volume reflect the electromagnetic radiation. This enables long pathways of the reflected light signals. Long pathways in turn provoke best chances to make the electromagnetic radiation react with the molecules of the component desired to be detected in the gas resident in the second volume. Signal amplitude and signal to noise ratio supplied by the pressure transducer are improved. Accordingly, the reflective shield is applied and arranged to generate a separate volume, i.e. the second volume, which shows enhanced reflectivity. This second volume may in one embodiment be defined only by one surface of the reflective shield and an inner surface of the measurement cell body, and in particular may not contain any electrical components with non- or bad-reflecting properties.

In the second volume, the photoacoustic effect occurs: Molecules of a gas component of interest, e.g. CO₂, absorb electromagnetic radiation, in this example infrared radiation. The absorption leads to a generation of heat due to non-radiative decay, e.g. by collisions between the molecules of the gas component of and / or by collisions of the molecules of the gas component with different molecules, which in turn leads to an increase of pressure. By modulating an intensity of the electromagnetic radiation with a modulation frequency, a modulation of pressure may be achieved. Such pressure modulation represented by pressure variations, i.e. sound waves, may be measured by the pressure transducer arranged in the first volume. The value indicative of a presence or a concentration of the component, i.e. the component's concentration, may then be determined dependent on an amplitude of the pressure variations. The amplitude may be assumed to be proportional to an amount of electromagnetic radiation absorbed by the component, and hence proportional to the component's concentration in the gas if all other factors, e.g. a mean optical path length in the measurement volume, stay equal.

Hence it is preferred that a large fraction of the electromagnetic radiation emitted by the electromagnetic radiation source is actually absorbed by the component, and preferably selectively absorbed only by the component of interest, and neither by other components of the gas nor by components of the device.

Moreover it is preferred that the pressure transducer measures the pressure variations, i.e. sound waves, at the modulation frequency caused by the photoacoustic effect in the component of interest, but not other sounds, e.g. sounds from the surroundings. The pressure transducer in the first volume is acoustically coupled to the second volume, i.e. a pressure equilibrium is generated between the first volume and the second volume at least for mid- and long-term pressure variations. Instead, short-term pressure variations arising from the photoacoustic effect, e.g. in time scales << than the inverse of the modulation frequency, are desired to be transmitted from the second volume into the first volume to be detected by the pressure transducer. In one embodiment, the acoustic coupling is achieved by the aperture in the reflective shield. This aperture then serves for both the acoustic coupling of the second volume to the first volume, and the optical coupling of the first volume to the second volume. In case the aperture in the reflective shield is the exclusive gate for a pressure compensation between the first volume and the second volume, it is preferred that the shield is arranged at a distance > 0 from the electromagnetic radiation source. Accordingly, the reflective shield is not sealed against the electromagnetic radiation source by means of the aperture. For this reason static pressure is balanced between the first and the second volume and gas may exchange between the first and second volume, while changes in pressure propagate through the aperture from the second volume into the first volume. The distance between the reflective shield and the electromagnetic radiation source preferably is between 10 um and 1 mm, and more preferably between 50 um und 200 um. Preferably, a diameter of the aperture in the reflective shield is between 100 um and 5 mm.

In addition to the aperture in the reflective shield, or alternatively, one or more additional apertures may be provided in the reflective shield for acoustic coupling. In addition to or instead of the one or more apertures, one or more gaps may be provided between the reflective shield and the measurement cell body, and / or between the reflective shield and the substrate in case the reflective shield is mounted on the substrate. In particular in the case of gaps, the reflective shield is embodiment as element separate from the measurement cell body. The gaps may then be designed on purpose, e.g. in the reflective shield, or may be generated by using manufacturing tolerances. For example, a gap between the measurement cell body and the reflective shield, which may be include multiple individual gaps or a single gap surrounding the reflective shield, may in one embodiment have a width between 10 um und 1 mm, or more preferably between 50 um und 200 um. Hence, a design and / or an arrangement of the optical reflective shield by no means lead to an acoustic shielding between the second and the first volume. Instead, pressure variations can be detected by the pressure transducer.

The provision of the second volume contributes to a longer mean optical path length of the electromagnetic radiation within the second volume. In this way, the mean optical path length within the second volume, which is a zig-zag path owed to the reflections, may be increased to > 1 cm, preferably > 3 cm, more preferably > 5 cm. This in turn facilitates the measurement cell to be small, in particular smaller than conventional photoacoustic gas sensors having a linear optical path length. In particular, dimensions of the measurement cell may be smaller than 2 x 2 x 2 cm³, preferably smaller than 1 x 1 x 1 cm³. The entire photoacoustic gas sensor device may have a size of e.g. 1 x 1 x 0.7 cm³. Despite the small size of the measurement cell, the mean optical path length is comparable, or even larger, than in many conventional photoacoustic gas detectors, and / or in conventional NDIR sensors.

Further advantages of the present invention include: The device is less prone to mechanical instabilities than conventional gas sensors, and may be built very stable. The values of the concentration of the component of interest are offset-free due to the underlying measurement principle of the photoacoustic effect, so only one device is needed for accurate measurements. Furthermore, a high reflectivity of the inner surfaces of the measurement cell reduces an offset of the pressure signal, which is generated by the photoacoustic effect occurring in solid matter, e.g. on the surface of the measurement cell body.

Specifically, the pressure transducer may be a microphone, in particular a microphone that is sensitive to only a certain range of frequencies around the modulation frequency. In one embodiment, the microphone is a bottom port microphone, a port of which microphone faces the substrate. On the one hand, this requires an opening, e.g. a lateral opening, between the microphone and the substrate such that the second volume and the bottom port of the microphone are communicatively coupled. Of course, the same applies to conventional microphones with a port facing the reflective shield. In a different embodiment, the pressure transducer is a pressure sensor.

In a preferred embodiment, the electromagnetic radiation is infrared radiation. This means that the electromagnetic radiation source is an infrared radiation source configured to emit infrared radiation. Infrared radiation preferably is defined as radiation having a wavelength in a range between 700 nm and 1 mm. In another embodiment, the electromagnetic radiation source is a source for emitting radiation of a wavelength in a range between 100 nm and 700 nm. The electromagnetic radiation source may in one embodiment be a heater, in another embodiment be a laser, in a further embodiment be an LED. The heater may also be considered as a broadband radiation source, while the laser and the LED may be considered a narrow band radiation source.

In a preferred embodiment, the electromagnetic radiation source comprises an emitter having an active area configured to emit the radiation in response to an excitation. As to the aperture in the shield, it is preferred that its size is adapted to a size of the active area. Ideally, all beams of the desired wavelength or band emitted by the active area would make it through the aperture. However, in case of misled light beams, it is preferred that the aperture in the reflective shield serves as an optical aperture and prevents undesired light beams from entering the second volume. For this purpose, a distance between the reflective shield and the electromagnetic radiation source is preferred between 10 um and 1 mm, and more preferably between 50 um und 200 um. Preferably, a diameter of the aperture in the reflective shield is between 100 um and 5 mm.

Preferably, the electromagnetic radiation emitted by the electromagnetic radiation source is only emitted in a band matching an absorption peak of the gas component of interest. A band is considered a subrange of the electromagnetic spectrum, preferably symmetrically around a wavelength representing the absorption peak, with a max / min band limit of +/- 15% of the wavelength representing absorption peak value.

In an embodiment, the photoacoustic gas sensor device is used as a CO₂ sensor. In that case the band of infrared radiation is centered around a wavelength of 4.3 µm. Preferably the band has a full width at half maximum of below 0.5 µm, which may be understood as a narrow band. A narrowband source may e.g. comprise a meta-surface resonator, and may be embodied as an LED, for example.

In another embodiment, the electromagnetic radiation source comprises a broadband emitter covered by a wavelength-selective bandpass filter configured to filter out electromagnetic radiation outside the band. The broadband emitter is defined as emitting radiation of a wide spectrum, such as across the entire infrared spectrum, or e.g. between 0.8 µm and 10 µm. Such broadband emitter may be a conventional infrared emitter with a heater.

In one embodiment, the emitter comprises a semiconductor chip embodying a hotplate, i.e. a thinned area of low thermal conductivity. On the hotplate, a light emitting structure is arranged and serves as active area. In a different embodiment, the hotplate in form of a thin membrane may represent the active area itself and radiate, e.g. in response to being heated. The hotplate may contain electrically conducting structures, collectively referred to as heater for heating the hotplate. In one embodiment, the active area of the hotplate may additionally comprise a coating or a layered stack for shaping the emissivity of the desired radiation, i.e. in particular of increasing the emissivity of radiation with the desired wavelengths or bands, and / or by decreasing or blocking the emissivity of radiation of wavelengths outside the band. In one embodiment, the hotplate may additionally comprise a temperature sensor used in a control of the temperature of the hotplate to a desired value.

The emitter preferably is packaged, and the package, e.g. a mold compound, has an access opening for allowing the emitter to emit the radiation. The access opening in the package may serve at the same time as optical aperture. Given that the package may exceed the emitter in height, the reflective shield, even if in contact with the package, is spaced from the active area of the emitter. This spacing preferably is between 20% and 200%, and preferably between 50 und 150% of the diameter of the active area of the emitter. In terms of improving heating efficiency, a distance between the active area of the emitter and a top surface of the package at the same time defining a top end of the access opening is preferred to be at least a fifth, preferably a third, preferably half of a diameter of the access opening.

In one embodiment, before packaging the emitter preferably is placed on a die pad of a carrier such as a leadframe. Heater contacts and / or other electrical contacts of the emitter are electrically connected to the carrier, e.g. by means of wire bonding. The die pad and the hot plate structure of the emitter may define a closed cavity in between, which in particular is an acoustically closed cavity. In terms of improving heating efficiency, a distance between the hot plate of the emitter and the die pad is preferred to be at least a fifth, preferably a third, preferably half of a diameter of the cavity. The leadframe and the emitter are packaged together in a common packaging step, in which the access opening is manufactured by means of a suitably shaped mold. The packaged emitter may then be placed and SMD mounted on the substrate.

In case of the emitter being a broadband emitter, the emitter preferably is covered by an optical bandpass filter. The optical bandpass filter may be arranged on the package for the emitter. For mounting the optical bandpass filter to the package, the package preferably contains a step for accepting the bandpass filter. The bandpass filter may be applied onto the step and be attached to the package, e.g. by gluing. The optical bandpass filter e.g. may be a dielectric filter, or a meta-material filter, or a CMOS absorption layer, such that in one embodiment only radiation of the desired band is emitted into the second volume.

The aperture in the reflective shield may not only serve for allowing radiation to enter the second volume, but may also serve as an optical aperture and prevent undesired radiation from entering the second volume. Undesired radiation may include light beams with wavelengths outside the desired band given that such radiation will not be absorbed by the target components in the gas. In particular, such undesired light beams may be generated in electromagnetic radiation sources comprising an emitter with a wide emergent angle.

For such shielding purposes, it is preferred that a diameter of the aperture in the reflective shield is between 100% and 400% of the diameter of the active area of the emitter, and more preferably between 200% and 300%. In a preferred embodiment, these dimensions are assumed in combination with a spacing between the reflective shield and the active area of the emitter of between 20% and 200% of the diameter of the active area, and more preferably between 50 und 150%. Such dimensioning of the diameter of the aperture of the reflective shield may also be applicable in combination with an electromagnetic radiation source absent an optical bandpass filter.

Alternatively or in addition, the diameter of the aperture of the reflective shield may also be dimensioned dependent from the emission profile of the emitter used. For example, a collimated emitter, such as a laser, in particular such as a VCSEL = Vertical-cavity surface-emitting laser will by nature show a narrow emergent angle, while a Lambertian emitter such as an infrared emitter comprising a heater shows a wide emergent angle in all 3D directions. Accordingly, for the collimated emitter, an aperture in the reflective shield preferably shows a diameter smaller than a diameter of an aperture in the reflective shield when applied in combination with a Lambertian emitter.

In case of a broadband emitter operated in combination with an optical bandpass filter, the radiation generated e.g. by an emitter with a wide emission profile may contain beams striking the optical bandpass filter with an incident angle deviating from the normal. In such scenario, the optical bandpass filter transmits a spectrum deviating from the desired band and dependent from the incident angle of the radiation, which spectrum in particular contains radiation outside the desired band. In such scenario, the access opening of the package on which the optical bandpass filter is mounted may be used as optical aperture, which preferably serves for limiting the incident angle of radiation into the optical bandpass filter. For such shielding purposes, a diameter of the access opening in the package is between 1.5 and 3 times the diameter of the active area of the emitter. In case of radiation of undesired wavelengths still reaching through the optical bandpass filter - e.g. emitted from sides of the optical bandpass filter owing to internal reflections - it is preferred that the reflective shield is arranged to cover the edges of the optical band pass filter either with or without a distance from the optical band pass filter. Alternatively or in addition, a diameter of the aperture in the reflective shield preferably is between 1 and 2.5 times the diameter of the access opening in the package. Hence, the diameters of the aperture in the reflective shield and the access opening of the package are selected in relation to each other and preferably also in relation to the diameter of the active area such that radiation emitted by the emitter with an angle of more than 60°, and preferably more than 45° relative to the normal is blocked by these apertures. In the above embodiments, the reflective shield preferably is arranged at a distance from a top surface of the optical bandpass filter between 0 um und 200 um.

Preferably, a thickness of the reflective shield is between 30 µm and 1 mm, in particular between 50 µm and 200 µm. Such thickness does not affect the dimensions of the photoacoustic sensor device too much, which dimensions are desired to be kept small.

Preferably, the shield is arranged in the measurement cell such that a distance from between the reflective shield and the electromagnetic radiation source is small. On the one hand, this enables a major portion of the radiation to enter the second volume and the second volume representing the space for implementing the photoacoustic effect is maximized while at the same time the first volume is kept small for dimensional purposes of the sensor. Preferably, a distance between the aperture in the reflective shield and the electromagnetic radiation source is between 10 µm and 1 mm, in particular between 50 µm and 200 µm.

Preferably, a ratio of the second volume to the first volume is at least 1.5, preferably at least 2, preferably at least 3, preferably at least 5. Such ratios are preferred in that the photoacoustic effect predominantly takes place in the second volume given that only the second volume is radiated. On the other hand, a large first volume would lower the pressure variations which would result in a less significant signal supplied by the pressure transducer. In addition, a large first volume would affect the diffusion of the gas into the second volume substantially provided the gas enters the first volume through a corresponding opening.

In an embodiment, the substrate is a printed circuit board (PCB), e.g. made from FR4. In a different embodiment, the substrate is made from a ceramic material which provides more mechanical stability. In a further embodiment, the substrate is part of a System in Package (SiP), or is an SiP substrate.

In one embodiment, a plane extension of the reflective shield and a plane extension of the substrate are aligned in parallel with each other. The aperture in the reflective shield preferably is in vertical alignment with the electromagnetic radiation source arranged on the substrate, and in particular is in vertical alignment with its active area. The electromagnetic radiation source and the pressure transducer face the reflective shield.

In another embodiment, the plane extension of the reflective shield extends in parallel to the substrate, however, on with portions on different vertical levels. The reflective shield may hence show a step-like shape, with the portions parallel to the substrate being aligned close to the height of the respective electrical components. Hence, the shape of the reflective shield follows a skyline of the electrical components to be covered. In a further embodiment, the reflective shield has a different, non-planar shape in order to follow a different envelope of the electrical components arranged on the substrate in the first volume, and / or to increase the reflective surfaces defining the second volume.

Preferably, a thickness of the reflective shield is between 30 µm and 1 mm, in particular between 50 µm and 200 µm. Such thickness does not affect the dimensions of the photoacoustic sensor device too much, which dimensions are desired to be kept small.

In an embodiment, the photoacoustic sensor device further comprises an integrated circuit, also known as chip, and in particular an ASIC, which preferably includes the functionality of a controller for the photoacoustic sensing, configured to control the electromagnetic radiation source. The integrated circuit preferably is arranged on the front side of the substrate. The integrated circuit preferably is configured to control an intensity of the electromagnetic radiation to modulate with the modulation frequency. The modulation frequency is between 1 Hz and 100 kHz, preferably between 10 Hz and 200 Hz, more preferably between 20 Hz and 60 Hz, e.g. 40 Hz, and in particular a heater, if applicable, of the electromagnetic radiation source is switched with the modulation frequency. Low modulation frequencies of < 100 Hz are advantageous for generating large photoacoustic signals.

Preferably the integrated circuit is configured to receive a measurement signal from the pressure transducer and to determine the value indicative of a presence or a concentration of the component dependent on the measurement signal, preferably including signal processing such as linearization and / or compensation. In particular the value is determined dependent on an amplitude of the measurement signal, e.g. a loudness in the case of a sound wave. Preferably the measurement signal is bandpass-filtered around the modulation frequency. This increases a robustness of the determination since sound waves with other frequencies are not taken into account.

In an embodiment, the photoacoustic sensor device further comprises another transducer for sensing one or more of temperature and/or humidity and/or pressure and/or different components in the gas. Accordingly, the other transducer may be embodied as one or more of a pressure sensor, a barometric pressure sensor, another microphone, another gas sensor, e.g. of metal oxide type or of electrochemical type. The other transducer may be arranged on or integrated in the front side of the substrate. Preferably, the other transducer is located inside the measurement cell. In the presence of the other transducer, the integrated circuit is preferably configured to compensate the value indicative of a presence or a concentration of the component dependent on measurement values of the other transducer. Hence effects of ambient conditions on the measurement of the component can be reduced or eliminated. Such compensation makes a resulting concentration value more accurate and reliable, or in other words, the gas sensor device may be applied in varying environment conditions.

Preferably, all electrical and electronic components of the photoacoustic sensor device, collectively referred to electrical components, are mounted on the front side of the substrate. At least the pressure transducer, the electromagnetic radiation source, and possibly the measurement cell body are surface mounted on the front side of the substrate. Preferably, all electrical components are surface mounted on the front side of the substrate such that the photoacoustic gas sensor device is an SMD (surface mounted device).

In an embodiment, in addition to the pressure transducer and the electromagnetic radiation source, the integrated circuit and / or the other transducer if any are also arranged on the front side of the substrate in the first volume, and preferably face the reflective shield. In another embodiment, all electrical components are arranged in the first volume, and preferably face the reflective shield.

In case the reflective shield does not cover the entire first volume except for the aperture and comprises additional apertures and / or gaps between the shield and the measurement cell body or the substrate, it is preferred that all electrical components arranged on the front side of the substrate in the first volume face the reflective shield.

It is preferred that the electrical components are arranged space-saving in the first volume, in order to retain a small footprint of the sensor. By means of such arrangement, all these components arranged in the first volume are preferably protected against mechanical impact, dirt and dust, and ESD.

Preferably, the back side of the substrate only includes contacts for electrically connecting the photoacoustic gas sensor device to a carrier. In an embodiment, the contacts include land grid array (LGA) pads arranged for SMD assembly and/or reflow soldering. This facilitates an assembly of the device with other components by the customer. Other choices of contacts may include DFN, QFN or castellated holes.

The reflective shield preferably is made of or comprises a material with low thermal diffusivity, which material may include one or more of plastic material and stainless steel or other metals with a low thermal diffusivity. A material with low thermal diffusivity is understood as a material with a thermal diffusivity of less than 20 mm²/s, preferably of less than 10 mm²/s, preferably of less than of less than 5 mm²/s.

Such material selection may reduce or prevent a temperature modulation in the second volume generated by the pulsed operation of the electromagnetic radiation source in the first volume. The pulsed operation may e.g. include the pulsed operation of a heater of an infrared source. Changes in temperature modulated by the operation of the infrared source may otherwise reach through the shield into the gas in the second volume. On the other hand, thermal activity caused by the reaction of the radiation with the molecules of interest is responsible for the sound waves to be measured, which sound waves may otherwise also be generated by the heater induced temperature modulations in the second volume. Accordingly, the reflective shield is configured to shield the second volume from a temperature modulation evoked by the operation of the electromagnetic radiation source. For this purpose, a material with a low thermal diffusivity is used, such that heat moves only slowly through the material of the reflective shield, or through a coating or a layer thereof preferably facing the first volume.

In such embodiment, the reflective shield preferably is arranged close by or in contact with thermally conducting elements of the electromagnetic radiation source excluding the emitter element with its active area, which, of course, is not desired to be covered. Preferably, a distance between such element and the reflective shield is between 0 um and 300 um, and more preferably between 0 um and 200 um. In case of zero distance between the electromagnetic radiation source and the shield, the shield preferably is in contact with such element, e.g. with a housing of the electromagnetic radiation source, e.g. by way of gluing. The housing may be made from metal. Another heat dissipating element of the electromagnetic radiation source may include an optical band pass filter arranged on top of a broadband infrared emitter of an infrared light source. Such optical band pass filter may contain or be made of silicon with good thermal conducting properties. For example, in case the emitter has a circular shape, the optical bandpass filter may be of rectangular shape, and the aperture in the reflective shield may be of circular shape and is arranged above or on top of the optical band pass filter.

While the material selection of this preferred embodiment is designed for shielding and damping thermal transmission into the second volume, it still may be preferred to conduct heat from the shield to a heat sink. Hence, in one embodiment the reflective shield is thermally connected to a heatsink of the substrate, in particular to a ground contact of the substrate, e.g. a ground contact of the PCB, in particular by means of one or more legs of the reflective shield.

In a preferred embodiment, the reflective shield is made of or comprises an electrically conducting material. In one embodiment, the material providing reflectivity may be different from the electrically conducting material. In a different embodiment, however, the same material is used, such as metal or a metal-filled polymer which show both properties at the same time: Optical reflectivity as well as electrical conductivity, either as a coating of a core of the reflective shield, which coating e.g. is made of Au or Ni, or as material the reflective shield is made of in its entirety.

In this context, the shield additional serves as protective element against electrostatic discharge and may at the same time guarantee electromagnetic compatibility (EMC). While electronic components generally are sensitive to electric discharge, e.g. during handling or mounting of the assembled or semi-assembled sensor, in particular stemming from humans or machines in touch with the electronic components, the reflective shield preferably is configured and arranged to protect the electronic components in the first volume from electric discharge.

In a preferred embodiment, the reflective shield is electrically connected to a ground contact of the photoacoustic sensor device. The ground contact may be part of a wiring embodied in the substrate, and e.g. may be a metallized pad on the front side of the substrate, which preferably is electrically connected to one of the contact pads at the backside of the substrate, e.g. by means of through contacts.

In one embodiment, the reflective shield comprises one or more electrically conducting legs formed integrally and mounted on the substrate, e.g. by soldering or by a conductive bonding. In particular, at least one of the legs is bonded or soldered to one or more ground contacts on the front side of the substrate. The reflective shield may thus be embodied as metallic punching and / or bending element, the legs of which reflective shield are manufactured by punching. While the legs being in the common plane with the rest of the reflective shield after punching, they are bent, e.g. by 90° in order to manufacture a cap-like structure which then can be mounted onto the front side of the substrate.

Preferably, the ESD-protection reflective shield is reflow soldered on the substrate. For this purpose, it is preferred that the reflective shield and the measurement cell body are spaced apart from each other not only as the preferably planar ceiling of the reflective shield is concerned, but also as the legs are concerned. Hence, the legs do not touch the measurement cell body. In particular, a minimum distance between the reflective shield and the measurement cell body, which likely is a lateral distance between the legs of the shield the measurement cell body, is smaller than a distance between the measurement cell body to other electronic components which ensures that electrostatic discharge will be trapped by the reflective shield and may be diverted, rather than other sensitive electronic components being affected.

Preferably, the legs are individual legs instead of a flange enclosing the volume between the substrate and the reflective shield. Hence, the reflective shield only is similar to a cap, however, exhibits open sides which again promote a reflow soldering of the reflective shield onto the substrate. In particular, the reflective shield can be reflow soldered in combination / at the same time with the other electrical components to be mounted on the front side underneath the reflective shield. By means of the open sides of the reflective shield, solder paste for soldering the electrical components may still be sufficiently heated in the reflow oven such that the solder paste becomes liquid at all locations desired to be soldered. Alternatively, the shield may be attached to the substrate by gluing and / or a snap-fit.

For electromagnetic compatibility, the electronic components are preferably shielded i.a. by the reflective shield, which in one embodiment may be designed as to form a galvanic cage when mounted on the substrate. Preferably, in addition a metallization may be provided on or in the substrate, e.g. in form of one of the electrically conducting layers being embodied as planar layer, which in combination with the reflective shield may serve as galvanic cage.

Preferably the measurement cell body and the substrate are connected in a gas-tight manner, e.g. by gluing or soldering. Advantageously the measurement cell is acoustically tight except for the opening if any for the gas to enter.

In an embodiment of the present invention, the reflective shield is supported by the measurement cell body. This may include that the reflective shield as such is manufactured as an element separate from the measurement cell body and is attached thereto e.g. by means of gluing. In anot her embodiment, however, the reflective shield and the measurement cell body are formed integrally. For example, the measurement cell body, or at least a part of it is formed as a molded part. In particular, the measurement cell body comprises a frame with an integrated reflective shield. The frame preferably has two compartments separated by the reflective shield. Accordingly, the frame including the shield may show the shape of an "H" with the two compartments being uncovered. The upper compartment finally represents the second volume, which preferably is covered by a lid. The lower compartment finally represents the first volume and is covered by the substrate when the frame is mounted on the substrate. Again, it is preferred that a surface of the reflective shield facing the second volume preferably is completely made of the reflective material, as preferably is the inner surface of the frame defining the second volume. Accordingly, a reflective coating may be arranged on the surfaces defining the upper compartment of the frame. And, preferably, at least a surface of the lid facing the upper compartment, i.e. the second volume, is made of the reflective material. Alternative to the lid, the molded frame may also integrally include the lid.

In another embodiment, and in particular in case of a the measurement cell body comprising a frame as laid out above, the frame comprises an overhang or a bulge defining a compartment outside the measurement volume between the measurement cell body and the substrate. In this compartment, one or more electrical components may be are arranged on the front side of the substrate. In case of the reflective shield contributing to the bulge, the first volume has a complement outside the measurement volume which is the compartment. While the first volume is a part of the measurement volume and hence preferably is acoustically tight, the compartment outside the measurement volume is not acoustically tight but in direct communication with the surroundings. The bulge mechanically protects the electrical components arranged in the compartment, and may also protect from dust, dirt and ESD. In a preferred embodiment, the other transducer is arranged on the substrate in the compartment. This arrangement protects the other transducer while a response time of the other transducer is not significantly impacted when measuring a parameter of the environment such as temperature or humidity.

In an embodiment, a gas permeable membrane covers the opening. The membrane is permeable for a gas exchange between the measurement volume and surroundings of the measurement cell. The gas permeable membrane may in particular be made of one or more of the following materials: sintered metal, ceramic, polymer. The membrane advantageously also acts as a decoupling element between the measurement volume and the surroundings of the measurement cell. Thus it preferably damps a movement of gas molecules through the membrane such that pressure variations, e.g. sound waves, from the surroundings are damped when propagating into the measurement volume, and pressure variations inside the measurement volume are largely kept inside.

In the above embodiments comprising the frame, the opening for the gas entering the second volume may be arranged in the lid, or between the lid and the frame. However, in a different embodiment, the lid may be mounted to the frame in an acoustic and optical sealed manner. In such embodiment, the opening may be embodied between the measurement cell body and the substrate, and in particular between the frame and the substrate. In particular, the opening may be closed by the gas permeable membrane. For example, a ring-shaped membrane may be arranged onto the substrate, and the ring-shaped frame may be deposited onto the membrane. In such example, the frame may contain integral clips in order to mount the frame to the substrate. Such one or more clips, for example, may engage on the back side of the substrate for fixing the frame to the substrate with a sufficient force to provide a sealing. Appropriate access to the membrane from the surroundings is provided. Accordingly, the membrane at the same time seals the measurement volume against particles and liquids, and provides for a lateral diffusion of the gas from the outside through the membrane.

In a preferred embodiment, the measurement cell body is mounted to the substrate by means of a snap fit. Preferably, the measurement cell body comprises one or more snap arms and the substrate comprises one or more corresponding holes for the one or more snap arms to reach through. Preferably, the snap fit is designed to mount the measurement cell body acoustically tight to the substrate. In one embodiment, a footprint of the substrate and a footprint of the measurement cell body match by a tolerance of at most 10% for each dimension defining the planar extension thereof. Hence, the substrate and a projection of the measurement cell body onto the substrate may match more or less.

In a further embodiment of the present invention, a first cap is mounted on the front side of the substrate and a second cap is mounted on top of the first cap. A ceiling of the first cap represents or includes the reflective shield. The second cap and the flange of the first cap in combination represent the measurement cell body. In this embodiment, the opening for the gas to enter preferably is arranged in the second volume. However, again other locations of the opening, such as between the first cap and the substrate, or in the substrate are possible. Again, the measurement cell body may be mounted to the substrate by means of a snap fit.

In a preferred embodiment, the substrate comprises the opening. In such embodiments, the gas enters the first volume through the substrate, and the second volume through the aperture in the reflective shield. In case of a gas permeable membrane covering the opening, the membrane preferably is attached to the front side of the substrate. This arrangement of the membrane improves the assembly of the substrate. The electrical components to be arranged on the front side of the substrate and the membrane may preferably be assembled onto the substrate in a common step, such as a surface mounting step. This reduces the number of assembly steps for manufacturing the device. Specifically, the membrane may be soldered by a solder applied to an edge of the membrane which enables reflow soldering. In this arrangement of the membrane inside the first volume, the membrane itself is protected from mechanical impact and dust and dirt.

Here, it is preferred that the opening in the substrate and the aperture in the reflective shield are offset from each other in the lateral dimension. This already results from the preference that the radiation source is arranged on the substrate in alignment with the aperture such that the location of the radiation source on the substrate cannot be used for the opening in the substrate and the membrane covering the opening. This is beneficial also for the reason, that the membrane typically is of low reflectivity and as such does not form part of the second volume.

Other advantageous embodiments of the photoacoustic gas sensor are listed in the dependent claims as well as in the detailed description below.

According to a second aspect of the present invention, which in particular is independent from the reflective shield and hence may lack the reflective shield, a photoacoustic gas sensor device is provided for determining a value indicative of a presence or a concentration of a component in a gas. Accordingly, the photoacoustic gas sensor device of this aspect comprises: A substrate and a measurement cell body. The substrate and the measurement cell body define a measurement cell enclosing a measurement volume. An electromagnetic radiation source is provided for emitting electromagnetic radiation in the measurement volume. A pressure transducer is provided for measuring a sound wave generated by the component in response to an absorption of electromagnetic radiation by the component. The electromagnetic radiation source and the pressure transducer are arranged on the front side of the substrate and in the measurement volume. The substrate comprises an opening for a gas to enter the measurement volume.

According to third aspect of the present invention, which in particular is independent from the reflective shield and hence may lack the reflective shield, a photoacoustic gas sensor device is provided for determining a value indicative of a presence or a concentration of a component in a gas. Accordingly, the photoacoustic gas sensor device of this aspect comprises: A substrate and a measurement cell body. The substrate and the measurement cell body define a measurement cell enclosing a measurement volume. An electromagnetic radiation source is provided for emitting electromagnetic radiation in the measurement volume. A pressure transducer is provided for measuring a sound wave generated by the component in response to an absorption of electromagnetic radiation by the component. The electromagnetic radiation source and the pressure transducer are arranged on the front side of the substrate and in the measurement volume. In this aspect, an opening for a gas to enter the measurement volume is formed by a gap between the measurement cell body and the substrate.

It is understood that all embodiments of the first aspect shall be disclosed also in combination with the second and third aspect of the present invention, as long as applicable.

### Brief Description of the Drawings

Embodiments of the present invention, aspects and advantages will become apparent from the following detailed description thereof. The detailed description makes reference to the annexed drawings, wherein the figures show:
Fig. 1 to Fig 3, and Fig. 5 to Fig. 10, each, a cut view of a photoacoustic gas sensor device according to an embodiment of the invention,
Fig. 4 perspective views a) and b) from top and from below of a photoacoustic gas sensor device according to an embodiment of the invention, and an open cut view c) of a slightly different embodiment of a photoacoustic gas sensor device.

### Detailed Description of the Drawings

Same elements are referred to by same reference numerals across all figures.

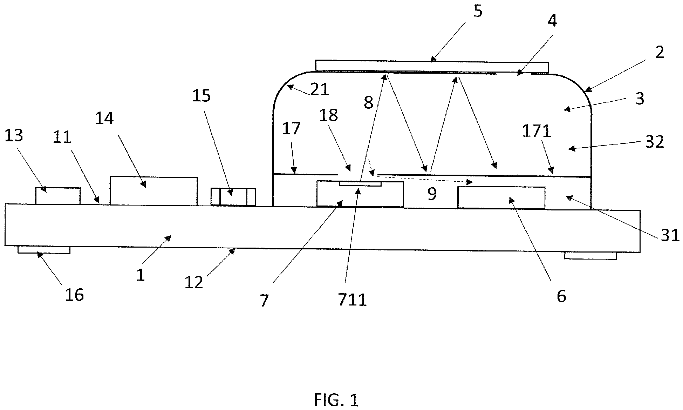

Fig. 1 shows a schematic cut view of a photoacoustic gas sensor device according to an embodiment of the present invention.

The device comprises a substrate 1, e.g. a printed circuit board (PCB), with a front side 11 and a back side 12 opposite the front side 11. A measurement cell body 2 is mounted on the front side 11 of the substrate 1, which substrate 1 and measurement cell body 2 together form a measurement cell enclosing a measurement volume 3. The measurement cell has an opening 4 to allow an exchange of gas between the measurement volume 3 and surroundings of the device. In Fig. 1, the opening 4 is located in the measurement cell body 2. The opening 4 is preferably covered by a membrane 5 which is gas permeable to allow for a gas exchange such that a concentration of the component of interest in the gas is similar as in the surroundings.

A pressure transducer 6 such as a MEMS microphone or a pressure sensor, and an electromagnetic radiation source 7, which in this example is an infrared source, are both located on the front side 11 of the substrate inside the measurement cell. The electromagnetic radiation source includes an active area 711 emitting the electromagnetic radiation, i.e. the infrared radiation in this example, indicated by arrows 8. The infrared source emits infrared radiation of the band, wherein the intensity of the infrared radiation is modulated as described above. The infrared radiation is selectively absorbed by molecules of the gas component of interest.

A reflective shield 17 is provided in the measurement cell. The reflective shield 17 presently extends in a plane parallel to a planar extension of the substrate 1. The reflective shield 17 is attached to or formed integrally with the measurement cell body 2. The reflective shield 17 divides the measurement volume 3 into a first volume 31 between the substrate 1 and the shield 17, and a second volume 32 between the shield 17 and the measurement cell body 2. The reflective shield 17 comprises an aperture 18 which presently is aligned with the infrared source 7, such that infrared radiation 8 can emit from the infrared source 7 through the aperture 18 into the second volume 32.

It is preferred that a surface 171 of the shield 17 facing the second volume 32 is made of a material reflecting the electromagnetic radiation emitted by the electromagnetic radiation source 7. This is indicated by the various arrows representing the electromagnetic radiation 8 reflected in the second volume 32 after being emitted from the infrared source 7. A ratio of infrared radiation 8 absorbed is increased by increasing a mean optical path length of the infrared radiation 8 within the measurement volume 3. This is achieved by a material of at least the inner surface 21 of the measurement cell body 2 being chosen to be reflective. In case of a coating, the reflective coating may be made from a metal such as gold, aluminum, nickel, copper. In this way, the overall reflectivity inside the second volume 32 is increased, which leads to more accurate measurements of the concentration of the component. The increase of the mean optical path length, in particular in contrast to the linear optical path in conventional photoacoustic gas sensors, is illustrated by multiple reflections of the infrared radiation 8 in the various Figures. Here, the photoacoustic effect comes into play: Molecules of the gas component of interest, e.g. CO₂, absorb the electromagnetic radiation in the second volume 32 leading to the generation of heat and hence an increase of pressure. By modulating an intensity of the electromagnetic radiation with a modulation frequency in the infrared source 7, a modulation of pressure may be achieved.

Such pressure modulation or pressure variations, i.e. sound waves, may be measured by the pressure transducer 6. In this example, the aperture 18 in the reflective shield 17 allows such sound waves generated in the second volume 32 to reach into the first volume 31 and hence to reach the pressure transducer 6. For this reason, a gap is provided between the reflective shield 17 and the electromagnetic radiation source 7. The sound waves are indicated by reference numeral 9 in Fig. 1. Accordingly, by means of the aperture 18 in the shield 17, the second volume 32, in which the absorption and sound wave generation predominantly takes place, is communicatively coupled to the first volume 31 and the pressure transducer 6. Accordingly, in the present example, not only the electromagnetic radiation enters the second volume 32 through the aperture 18, but also the sound waves propagate from the second volume 32 into the first volume 31 to the pressure transducer 6.

An integrated circuit 14 is arranged on the front side 11 of the substrate 1, which integrated circuit 14 may e.g. be an ASIC. In Fig. 1, the integrated circuit 14 is located outside the measurement cell; in a different embodiment, however, it may as well be located inside the measurement cell. The integrated circuit 14 is configured to control the electromagnetic radiation source 7, e.g. by imposing an intensity modulation on e.g. the infrared radiation emitted with a modulation frequency. The modulation frequency may be within the audible spectrum, e.g. between 20 Hz and 20 kHz, or it may be up to 100 kHz, or it may even be down to 5 Hz. The integrated circuit 14 is further configured to receive measurement values from the pressure transducer 6, as well as for determining a value of the gas component concentration from those measurement values, e.g. by using a predefined or a resettable calibration function linking the measurement values to concentration value of the gas component. The value of the gas component concentration may be output via a digital interface, e.g. an I2C interface, as may be values of one or more other transducers if any.

In the present example, another transducer 13 is arranged on the front side 11 of the substrate 1. In Fig. 1, the other transducer 13 is located outside the measurement cell; in a different embodiment, however, it may as well be located inside the measurement cell. Such other transducer 13 advantageously is one or more of the following: a temperature sensor, a humidity sensor, a combined temperature/humidity sensor, a pressure sensor, in particular a barometric pressure sensor, another microphone, another gas sensor, e.g. of metal oxide type or of electrochemical type. Through measurement values of temperature and/or humidity and/or any of the other parameters measured by such other transducer, a gas concentration value may be compensated, e.g. for effects of temperature and/or humidity, e.g. by the integrated circuit 14. Hence, effects of ambient conditions on the measurement of the component can be reduced or eliminated.

Further electrical components 15 may be arranged on the front side 11 of the substrate 1, preferably outside the measurement cell. Such further electrical components 15 may include passive components or auxiliary electronics, e.g. capacitors and resistors, as required.

On the back side 12 of the substrate 1, land grid array (LGA) pads 16 are arranged for SMD assembly and reflow soldering by a customer. Other contacts such as DFN, QFN or castellated holes are possible.

In one example, the component to be measured is CO₂. For CO₂, measurements in the range between 0 and 10'000 ppm, or between 0 and 40'000 ppm, or between 0 and 60'000 ppm CO₂ are possible.

The proposed photoacoustic gas sensor device, as e.g. shown in Fig. 1, may be built with a small form factor, such that it has an overall size of e.g. 1 x 1 x 0.7 cm³. Thus it is significantly smaller and also cheaper to manufacture than conventional photoacoustic or NDIR-based gas sensors.

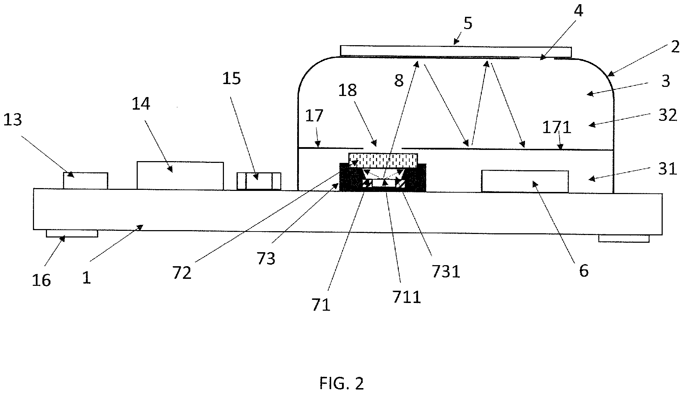

In the embodiment of Fig. 2, the electromagnetic radiation source 7 is embodied different from the one used in Fig. 1. The electromagnetic radiation source 7 of Fig. 2 comprises an emitter 71 packaged into a package 73, and an optical bandpass filter 72 on top of the package 73. The package 73 has an access opening 731 for radiation emitted by the emitter 71 to reach the second volume 32. The emitter 71 may be a broadband infrared emitter, e.g. emitting radiation over the entire infrared spectrum. The optical bandpass filter 72 allows to exclusively pass radiation of a band that is set according to the gas component of interest. For a detection of CO₂, the band is for instance centered around 4.3 pm, and has a typical band width of 0.5 µm, or smaller, e.g. 0.2 µm or 0.1 µm, such that a measured value is actually selective on CO₂. The optical aperture 18 and a further optical aperture represented by the properly designed access opening 731 may in combination prevent radiation of different bands to enter the second volume 32.

It is noted that the optical bandpass filter 72 is in contact with the reflective shield 17, e.g. via an O-ring or other sealing means. While such arrangement may be beneficial for several purposes such as thermal shielding etc., the acoustic coupling between the second volume 32 and the first volume 31, and the pressure transducer 6 respectively now no longer can be granted through the aperture 18 in the reflective shield 17. For this reason, gaps are provided between the reflective shield and the substrate 1 or the measurement cell body 2, for acoustically coupling the second volume 32 to the pressure transducer 6. Such gaps may better be seen from subsequent diagram 4c).

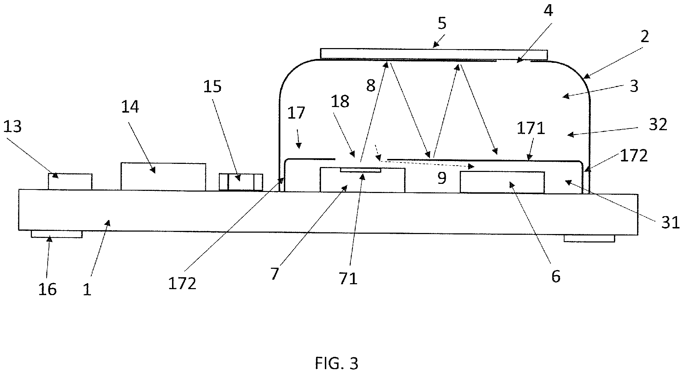

In Fig. 3, as is in Fig. 2, the reflective shield 17 is not attached nor mounted to the measurement cell body 2, but instead is directly mounted onto the substrate 1, i.e. on the front side 11 of the substrate 1 such as all the other electrical components. For this purpose, the reflective shield 17 not only provides a planar extension, but also provides for one or more legs referred to by 172. In one embodiment, the reflective shield 17 and its legs 172 are made integrally, and, e.g. the legs 172 are bent in order to serve as support. Preferably, the reflective shield 17 including the legs 172 are spaced apart from the measurement cell body 2, i.e. a gap is provided between the legs 172 of the reflective shield 17 and the measurement cell body 2 as is shown in Fig. 3, in order to allow reflow soldering also of the reflective shield 17. In case the reflective shield 17 including its legs 172 is made from metal, the reflective shield 172 not only serves as reflecting element, but also as protection against electrostatic discharge. For this purpose, it is preferred that at least one of the legs 172 is electrically connected to a ground contact 10 on the front side 11 of the substrate 1. This ground contact 10 may, via additional wiring on or in the substrate 1, be electrically connected to one of the contact pads 16, and serve as a ground connection for the entire photoacoustic sensor device.

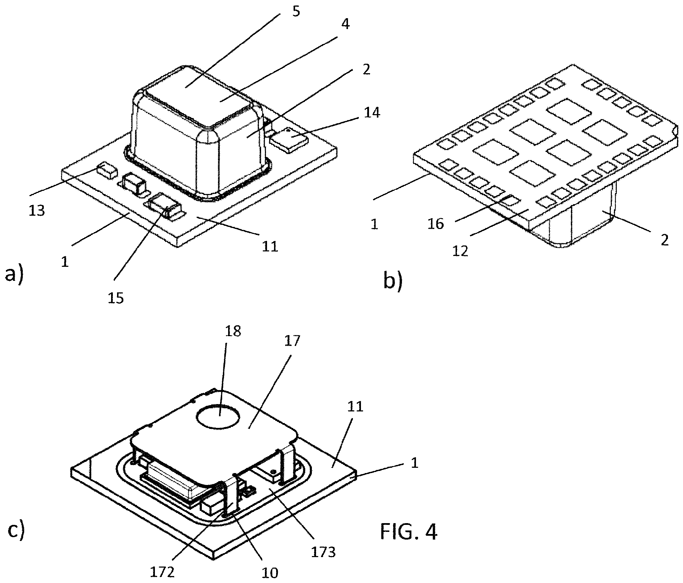

Figure 4 illustrates another embodiment of a photoacoustic gas sensor according to the present invention in two perspective views from top in a), and from bottom in b). In addition, diagram c) shows the photoacoustic gas sensor in a perspective view from top without the measurement cell body 2. As can be derived from Figs. 4a) and 4b), the photoacoustic gas sensor of this embodiment may be considered as a variation of the photoacoustic gas sensor of the embodiment of Fig. 3. In the embodiment of Figs. 4a) and 4b), the components 13, 14 and 15 are assembled at different locations on the substrate 1 outside the measurement cell. However, inside the measurement cell, as can be seen from the open cut view in Fig. 4c), the shield 17 again comprises legs 172 for mounting on the substrate 1. In particular, one of the mounting pads on the front side 11 of the substrate 1 serves as ground contact 10. One of the legs of the shield is electrically connected, e.g. soldered to the ground contact 10, for ESD purposes as laid out above. However, the cut open photoacoustic gas sensor from Fig. 4c) is slightly different from the embodiment shown in Fig. 4a) and 4b) in that the components 13, 14 and 15 previously arranged outside the measurement cell are now arranged under the reflective shield 17 inside the measurement cell to be built by mounting the measurement cell body 2 onto the substrate 1.

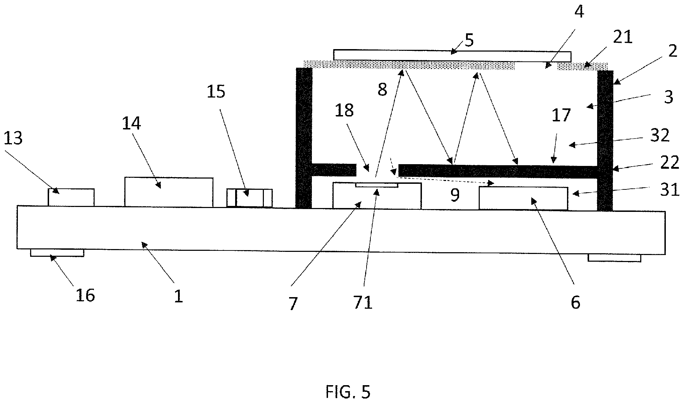

In the embodiment of Fig. 5, the reflective shield 17 now is formed integrally with the measurement cell body 2. Here, the measurement cell body 2 comprises a frame 22, and a lid 21 acting as a cover. The opening 4 now is provided in the lid 21, and the membrane 5 is attached to a top side of the lid 21 facing the surroundings. In this embodiment, the frame 22, the lid 21 and the reflective shield 17 may all be made from the reflective material, e.g. from metal. However, in a different embodiment, one or more of the frame 22, the lid 21 and the reflective shield 17 may comprise a plastic core, and a reflective coating where desired. Again, the electromagnetic radiation 8 enters the second volume 32 through the aperture 18 in the reflective shield 17. By means of the dimensioning of the aperture 18 and a gap between the reflective shield 17 and the electromagnetic radiation source 7, sound waves generated in the second volume 32 in response to the reaction of the molecules of the component of the gas with the electromagnetic radiation 8 reach the pressure transducer 6 and are converted in an electrical signal there.

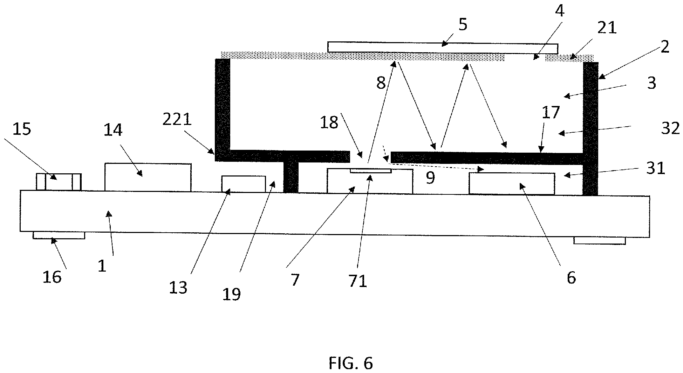

The embodiment of Fig. 6 resembles the embodiment of Fig. 5. Again, the reflective shield 17 is formed integrally with the measurement cell body 2, which additionally comprises a frame 22. A lid 21 manufactured separate from the frame 22 but attached thereto acts as a cover co-defining the second volume 32. In contrast to the embodiment of Fig. 5, the frame 22 now includes an overhang 221, also referred to as bulge. By means of the overhang 221, a compartment 19 is generated between the frame 22 and the substrate 1, which compartment is open to the left hand side. The compartment 19 is not part of the measurement volume 3 but is located outside. Still, electrical components such as the other transducer 13 arranged on the front side 11 of the substrate 1 in the compartment 19 are protected by the overhang 221, and thus may be less exposed not only to mechanical impact but also to moisture, dirt etc.

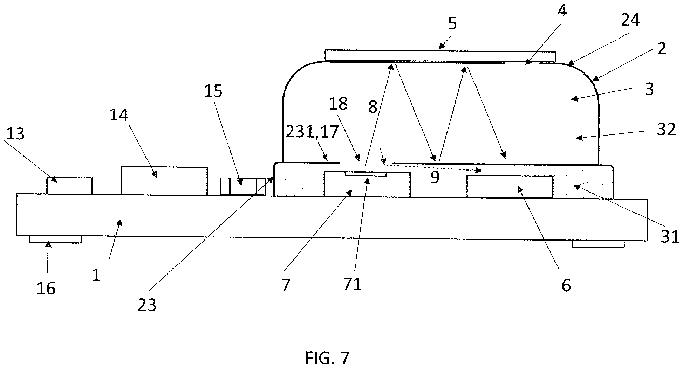

In the embodiment of Fig. 7 the measurement cell body 2 and the reflective shield 17 are embodied in a different setup. A first cap 23 is mounted on the front side 11 of the substrate 1, and a second cap 24 is mounted on top of the first cap 23. A ceiling 213 of the first cap 23 serves as reflective shield 17, while side walls of the first cap and the second cap 24 in combination contribute to the measurement cell body 2. The opening is arranged in the second cap 24, while the opening is arranged in the ceiling 231 of the first cap 23. This setup provides for an easy mounting of the caps 23 and 24.

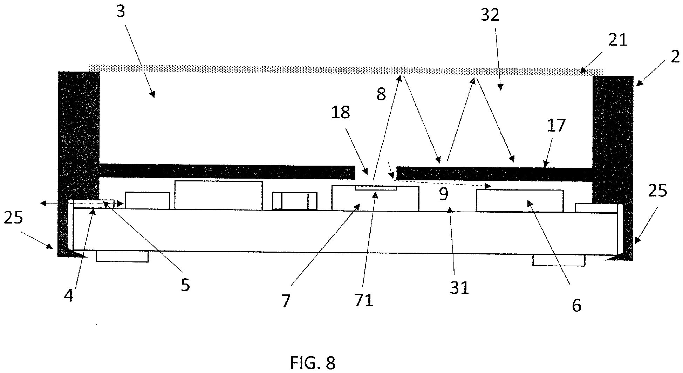

First, the embodiment of Fig. 8 differs from the embodiment of Fig. 5 in that all electrical components are arranged inside the measurement volume 3, and specifically are commonly arranged in the first volume 31 on the front side 11 of the substrate 1. This may include, in addition to the electromagnetic radiation source 7 and the pressure transducer 6 as follows: The integrated circuit 14, the one or more other transducers 13, and any further electrical components 15. Subject to the number and footprint of electric components to be commonly arranged in the first volume 31, this configuration may increase the footprint of the sensor, while on the other hand all electrical components are now protected by the reflective shield 17 and the measurement cell body 2. The electrical components may in addition benefit from other functions performed by the reflective shield 17, such as electrostatic discharge protection or thermal management.

Second, the embodiment of Fig. 8 differs from the embodiment of Fig. 5 in that the opening 4 now is provided between the substrate 1 and the measurement cell body 2. Owed to the construction of the measurement cell body 2, and specifically the frame 22 thereof, when clipping the frame 22 to the substrate 1, a horizontal gap is generated between the front side 11 of the substrate 1 and a bottom surface of the frame. This gap preferably takes the shape of a ring around the measurement volume 3, and is filled by e.g. a ring of gas permeable membrane material. Accordingly, the gas to be measured enters the measurement volume 3 laterally through the opening 4 between the measurement cell body 2 and the substrate 1, and diffuses from the first volume 31 through the aperture 18 into the second volume 32 where it meets the electromagnetic radiation 8. This process is indicated in Fig. 8 by the dotted arrow. In this embodiment, the lid 21 is understood to seal the measurement volume 3 from the top. In this embodiment, the footprint of the substrate 1 matches the footprint of the measurement cell body 2 such that snap fits 25 can be used for easily attaching the measurement cell body 2 to the substrate 1.

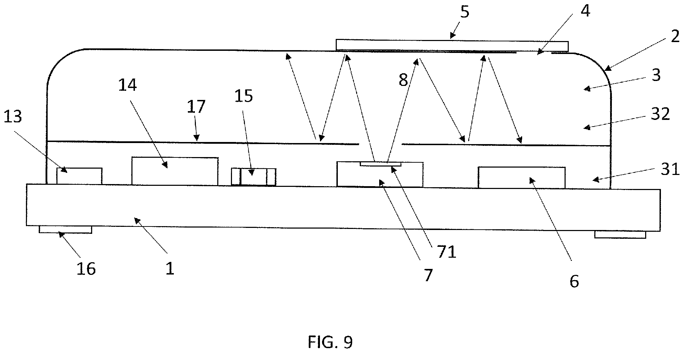

The embodiment of Fig. 9 differs from the embodiment of Fig. 1 in that all electrical components are arranged inside the measurement volume 3, and specifically are commonly arranged in the first volume 31 on the front side 11 of the substrate 1. This may include, in addition to the electromagnetic radiation source 7 and the pressure transducer 6 as follows: The integrated circuit 14, the one or more other transducers 13, and any further electrical components 15. Subject to the number and footprint of electric components to be commonly arranged in the first volume 31, this configuration is advantageous in that all electrical components are now protected by the reflective shield 17 and the measurement cell body 2. The electrical components may in addition benefit from other functions performed by the reflective shield 17, such as electrostatic discharge protection or thermal management.

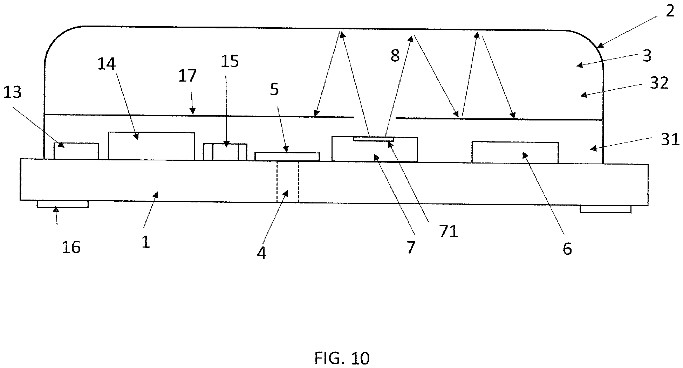

The embodiment of Figure 10 resembles the embodiment of Fig. 9 with all electrical components being commonly arranged within the measurement volume 3, and specifically within the first volume 31. However, while the opening 4 in the embodiment of Fig. 9 is arranged in the measurement cell body 2, and specifically in the portion of the measurement cell body 2 defining the second volume 32, the opening 4 of the embodiment of Fig. 10 now is arranged in the substrate 1, in form of a through-hole in the substrate 1. Accordingly, the gas to be measured enters the measurement volume 3 through the opening 4 in the substrate 1, and diffuses from the first volume 31 through the aperture 18 into the second volume 32 where it meets the electromagnetic radiation 8. The gas permeable membrane 5 now is attached to the substrate 1, and preferably is attached to the front side 11 of the substrate 1 facing the first volume 31. In this embodiment, the lid 21 is understood to seal the measurement volume 3 from the top.

While above there are shown and described embodiments of the invention, it is to be understood that the invention is not limited thereto but may be otherwise variously embodied and practiced within the scope of the following claims.

It is understood, that in particular the embodiments of Fig. 8 and Fig. 10 shall also be disclosed without the presence of the reflective shield 17.

## Claims

1. Photoacoustic gas sensor device, for determining a value indicative of a presence or a concentration of a component in a gas, the photoacoustic gas sensor device comprising:
- a substrate (1),
- a measurement cell body (2), the substrate (1) and the measurement cell body (2) defining a measurement cell enclosing a measurement volume (3),
- a reflective shield (17) dividing the measurement volume (3) into a first volume (31) and a second volume (32),
- an opening (4) in the measurement cell for a gas to enter the measurement volume (3),
arranged in the first volume (31) and on a
front side (11) of the substrate (1):
- an electromagnetic radiation source (7) for emitting electromagnetic radiation (8) through an aperture (18) in the reflective shield (17) into the second volume (32),
- a pressure transducer (6) communicatively coupled to the second volume (32) for measuring a sound wave (9) generated by the component in response to an absorption of electromagnetic radiation (8) by the component,
wherein at least a portion of a surface (171) of the reflective shield (17) facing the second volume (32) is made of a material reflecting electromagnetic radiation (8).

2. Photoacoustic gas sensor device according to claim 1,
wherein at least the major portion of the surface (171) of the reflective shield (17) facing the second volume (32) is made of the reflective material,
in particular wherein the entire surface (171) of the reflective shield (17) facing the second volume (32) is made of the reflective material,
in particular wherein the reflective material is coated on a core of the reflective shield (17),
in particular wherein the reflective shield (17) is made of the reflective material,
in particular wherein an inner surface (21) of the measurement cell body (2) facing the second volume (32) is made of the or another reflective material,
in particular wherein the reflective material is coated on a core of the measurement cell body (2),
in particular wherein the measurement cell body (2) is made of the reflective material,
in particular wherein the reflective material is a metal or a metal-filled polymer,
in particular wherein the inner surface (21) of the measurement cell body (2) facing the second volume (32) and the surface (171) of the reflective shield (17) facing the second volume (32) each have a reflectivity of more than 70%, preferably more than 80%, more preferably more than 90%,
in particular wherein a ratio of inner surfaces (171, 21) defining the second volume (32) with a reflectivity of above 70% to inner surfaces (171, 21) defining the second volume (32) with a reflectivity of below 70% is above 20, preferably above 50, more preferably above 100.

3. Photoacoustic gas sensor device according to one of the preceding claims,
wherein a ratio of the second volume (32) to the first volume (31) is at least 1.5, preferably at least 2, preferably at least 3, preferably at least 5,
in particular wherein a thickness of the reflective shield (17) is between 30 µm and 1 mm, in particular between 50 µm and 200 µm.

4. The photoacoustic gas sensor device according to one of the preceding claims,
wherein a plane extension of the reflective shield (17) and a plane extension of the substrate (1) are aligned in parallel with each other,
wherein the aperture (18) is arranged in the reflective shield (17) in vertical alignment with the electromagnetic radiation source (7) arranged on the substrate (1),
wherein the electromagnetic radiation source (7) and the pressure transducer (6) face the reflective shield (17),
in particular wherein a distance between the aperture (18) in the reflective shield (17) and the electromagnetic radiation source (7) is between 10 µm and 1 mm, in particular between 50 µm and 200 µm,
in particular wherein the aperture (18) is configured to enable a pressure equilibrium between the first volume (31) and the second volume (32) resulting in the communicatively coupling of the second volume (32) and the pressure transducer (6) to enable the pressure transducer (6) to measure the sound wave (9) generated by the component in the second volume (32).

5. Photoacoustic gas sensor device according to one of the preceding claims,
comprising one or more additional apertures in the reflective shield (17) connecting the first volume (31) and the second volume (32), and / or
comprising one or more gaps (173) between the reflective shield (17) and the measurement cell body (2) or the substrate (1), the one or more gaps (173) connecting the first volume (31) and the second volume (32),
in particular wherein the one or more additional apertures and / or the one or more gaps (173) are configured to enable a pressure equilibrium between the first volume (31) and the second volume (32) resulting in the communicative coupling of the second volume (32) and the pressure transducer (6) to enable the pressure transducer (6) to measure the sound wave (9) generated by the component in the second volume (32).

6. Photoacoustic gas sensor device according to one of the preceding claims,
wherein the reflective shield (17) is made of or comprises a material of a thermal diffusivity of less than 20 mm²/s, preferably less than 10 mm²/s, preferably less than of less than 5 mm²/s,
in particular wherein the reflective shield (17) is made of or comprises plastic material or stainless steel,
in particular wherein the reflective shield (17) is configured and arranged to reduce or shield a temperature modulation of the gas in the second volume (32) evoked by an operation of the electromagnetic radiation source (7),
in particular wherein the reflective shield (17) is thermally connected to a heatsink of the substrate (1), in particular to a ground contact (10) of the substrate (1), in particular by means of one or more legs (172) of the reflective shield (17),
in particular wherein the electromagnetic radiation source (7) is in contact with the reflective shield (17),
in particular wherein the electromagnetic radiation source (7) comprises an emitter (71) and an optical band pass filter (72) between the emitter (71) and the reflective shield (17), wherein the reflective shield (17) is in contact with the optical band pass filter (72).

7. Photoacoustic gas sensor device according to one of the preceding claims,
comprising wiring including a ground contact (10),
wherein the reflective shield (17) is made of or comprises an electrically conducting material,
wherein the reflective shield (17) is electrically connected to the ground contact (10),
in particular wherein the electrically conducting material is coated on a core of the reflective shield (17),
in particular wherein the reflective shield (17) is made of the electrically conducting material,
in particular wherein the electrically conducting material is metal or a metal-filled polymer,
in particular wherein the reflective shield (17) is an electrostatic discharge protection element for protecting the electromagnetic radiation source (7) and / or the pressure transducer (8) from an electrostatic discharge,
in particular wherein the substrate (1) supports the wiring including the ground contact (10),
in particular wherein the reflective shield (17) comprises one or more electrically conducting legs (172) mounted on the substrate (1) and soldered or conductively adhered to the ground contact (10),
in particular wherein the reflective shield (17) and the one or more legs (172) are formed integrally,
in particular wherein the reflective shield (17) and the measurement cell body (2) are spaced apart from each other.

8. The photoacoustic gas sensor device according to one of the preceding claims, further comprising
an integrated circuit (14) configured to receive a measurement signal from the pressure transducer (6) and to determine the value indicative of a presence or a concentration of the component dependent on the measurement signal, in particular dependent on an amplitude of the measurement signal, in particular wherein the measurement signal is bandpass-filtered around the modulation frequency,
in particular wherein the integrated circuit (14) is arranged in the first volume (31) together with the electromagnetic radiation source (7) and the pressure transducer (6), and is arranged on the front side (11) of the substrate (1),
in particular wherein the integrated circuit (14) is configured to control the electromagnetic radiation source (7),
in particular wherein the integrated circuit (14) is configured to control an intensity of the electromagnetic radiation (8) to modulate with a modulation frequency, which modulation frequency is between 1 Hz and 100 kHz, preferably between 10 Hz and 200 Hz, more preferably between 20 Hz and 60 Hz.

9. The photoacoustic gas sensor device according to one of the preceding claims, further comprising
- another transducer (13) for sensing one or more of temperature, humidity, pressure, one or more different components in a gas,
in particular wherein the other transducer (13) is arranged in the first volume (31) together with the electromagnetic radiation source (7) and the pressure transducer (6), and is arranged on or integrated in the front side (11) of the substrate (1),
in particular wherein the integrated circuit (14) is configured to compensate the value indicative of a presence or a concentration of the component dependent on measurement values of the other transducer (13).

10. Photoacoustic gas sensor device according to one of the preceding claims,
wherein the measurement cell body (2) is mounted on the front side (11) of the substrate (1),
wherein the reflective shield (17) is supported by the measurement cell body (2),
in particular wherein the reflective shield (17) is attached to the measurement cell body (2),
in particular wherein the reflective shield (17) and the measurement cell body (2) are formed integrally,
in particular wherein the measurement cell body (2) comprises an overhang (22) defining a compartment (19) outside the measurement volume (3) between the measurement cell body (2) and the substrate (1) on which front side (11) of the substrate (1) one or more electrical components (15) are arranged in the compartment (19),
in particular wherein the measurement cell body (2) comprises the opening (4) arranged for the gas to enter the second volume (32).

11. Photoacoustic gas sensor device according to one of the claims 1 to 9,
wherein the measurement cell body (2) is mounted on the front side (11) of the substrate (1),
wherein the reflective shield (17) is embodied as a cap mounted on the front side (11) of the substrate (1),
wherein the reflective shield (17) and the measurement cell body (2) are spaced apart from each other,
in particular wherein the measurement cell body (2) comprises the opening (4) arranged for the gas to enter the second volume (32).

12. Photoacoustic gas sensor device according to one of the claims 1 to 9,
wherein the measurement cell body (2) includes a first cap (23) mounted on the front side (11) of the substrate (1),
wherein the measurement cell body (2) comprises a second cap (24) mounted on top of the first cap (23),
wherein a ceiling (231) of the first cap (23) represents or includes the reflective shield (17),
in particular wherein the measurement cell body (2) comprises the opening (4) arranged for the gas to enter the second volume (32).

13. Photoacoustic gas sensor device according to one of the preceding claims, further comprising
- a gas permeable membrane (5) covering the opening (4),
wherein the gas permeable membrane (5) is permeable for a gas exchange between the measurement volume (3) and surroundings of the measurement cell,
in particular wherein the gas permeable membrane (5) is made of one or more of the following materials: sintered metal, ceramic, plastic.

14. Photoacoustic gas sensor device according to one of the preceding claims,
wherein the substrate (1) comprises the opening (4),
in particular wherein the membrane (5) is attached to the substrate (1),
in particular wherein the membrane (5) is attached to the front side (11) of the substrate (1),
in particular wherein the opening (4) in the substrate (1) is offset from the aperture (18) in the reflective shield (17).

15. Photoacoustic gas sensor device according to one of the preceding claims,
wherein the opening (4) is formed by a gap between the measurement cell body (2) and the substrate (1),
in particular wherein the membrane (5) is arranged between the measurement cell body (2) and the substrate (1), in particular in the gap.

16. Photoacoustic gas sensor device according to one of the preceding claims,
wherein the electromagnetic radiation source (7) comprises an emitter (71) including an active area (711) for emitting the electromagnetic radiation (8),
wherein a diameter of the aperture (18) in the reflective shield (17) is between 100% and 400% of a diameter of the active area (711) of the emitter (71), and more preferably between 200% and 300%,
in particular wherein a spacing between the reflective shield (17) and the active area (711) of the emitter (71) is between 20% and 200% of the diameter of the active area (711), and more preferably between 50% und 150%,
in particular wherein the aperture (18) in the reflective shield (17) is an optical aperture shielding from radiation of a wavelength or band outside a desired wavelength or band entering the second volume (32).

17. Photoacoustic gas sensor device according to one of the preceding claims,
wherein the electromagnetic radiation source (7) comprises:
an emitter (71) including an active area (711) for emitting the electromagnetic radiation (8),
a package (73) for the emitter (71), the package (73) comprising an access opening (731) enabling the active area (711) of the electromagnetic radiation source to (7) to emit the electromagnetic radiation (8),
an optical bandpass filter (72) covering the access opening (731) of the package (73),
wherein the reflective shield (17) is arranged to cover edges of the optical band pass filter (72), and / or
wherein a diameter of the aperture (18) in the reflective shield (17) is between 1 and 2.5 times a diameter of the access opening (731) in the package (73),
in particular wherein the reflective shield (17) is arranged at a distance between 0 um und 200 um from a top surface of the optical bandpass filter (72),
in particular wherein a diameter of the aperture (18) in the reflective shield (17) is between 100% and 400% of a diameter of the active area (71) of the emitter (71), and more preferably between 200% and 300%.
in particular wherein the aperture (18) in the reflective shield (17) and the access opening (731) in the package (73) are optical apertures shielding the second volume (32) from radiation of a wavelength or band outside a desired wavelength or band.

18. Photoacoustic gas sensor device according to one of the preceding claims,
wherein the measurement cell body (2) is mounted to the substrate (1) by means of a snap fit (25),
in particular wherein the measurement cell body (2) comprises one or more snap arms and the substrate (1) comprises one or more corresponding holes for the one or more snap arms to reach through,
in particular wherein the snap fit is designed to mount the measurement cell body (2) acoustically tight to the substrate (1),
in particular wherein a footprint of the substrate (1) and a footprint of the measurement cell body (2) match by a tolerance of at most 10% for each dimension defining the planar extension thereof.

19. Photoacoustic gas sensor device, for determining a value indicative of a presence or a concentration of a component in a gas, the photoacoustic gas sensor device comprising:
- a substrate (1),
- a measurement cell body (2), the substrate (1) and the measurement cell body (2) defining a measurement cell enclosing a measurement volume (3),
- an opening (4) in the substrate (1) for a gas to enter the measurement volume (3),
arranged on a front side (11) of the substrate (1) and in the measurement volume (3):
- an electromagnetic radiation source (7) for emitting electromagnetic radiation (8) in the measurement volume (3),
- a pressure transducer (6) for measuring a sound wave (9) generated by the component in response to an absorption of electromagnetic radiation (8) by the component.

20. Photoacoustic gas sensor device, for determining a value indicative of a presence or a concentration of a component in a gas, the photoacoustic gas sensor device comprising:
- a substrate (1),
- a measurement cell body (2), the substrate (1) and the measurement cell body (2) defining a measurement cell enclosing a measurement volume (3),
- an opening (4) formed by a gap between the measurement cell body (2) and the substrate (1) for a gas to enter the measurement volume (3),
arranged on a front side (11) of the substrate (1) and in the measurement volume (3):
- an electromagnetic radiation source (7) for emitting electromagnetic radiation (8) in the measurement volume (3),
- a pressure transducer (6) for measuring a sound wave (9) generated by the component in response to an absorption of electromagnetic radiation (8) by the component.
